# DEMANDE DE BREVET EUROPEEN

(11) **EP 1 406 208 A1**
(43) Date de publication de la demande: **07.04.2004**
(21) Numéro de dépôt: 02079135.6
(22) Date de dépôt: 02.10.2002
(51) Int. Cl.: G06K 19/07, G06K 7/00

(54) **Procédé d'identification d'une pluralité de transpondeurs localisés dans un espace par un lecteur ayant plusiers antennes**

(71) Demandeur: EM Microelectronic-Marin SA, 2074 Marin (CH)
(72) Inventeur: Roz, Thierry, 2515 Prêles (CH); Stiglic, Maksimilijan, 2000 Maribor (SI)
(74) Mandataire: Surmely, Gérard

(57) **Abrégé**

L'invention concerne un procédé d'identification d'une pluralité de transpondeurs passifs 6 à l'aide d'un lecteur comprenant plusieurs antennes avec leurs champs de détection non confondus spatialement et/ou temporellement, ces transpondeurs comprenant une mémoire analogique 34 ou digitale 52 permettant de conserver une information binaire durant un certain intervalle de temps en l'absence de champs d'alimentation du lecteur. Pour chaque antenne, le procédé met en oeuvre en série un protocole d'anti-collision au cours duquel chaque transpondeur identifié est mis dans un mode "silence". Il est prévu de stocker dans ladite mémoire de chaque transpondeur identifié cette information durant un intervalle de temps comprenant au moins la période de commutation entre une première antenne et une deuxième antenne du lecteur. Ceci permet d'éviter la détection de mêmes transpondeurs par plusieurs antennes, ce qui rend le procédé d'identification plus rapide et efficace.

## Description

La présente invention concerne un procédé d'identification d'une pluralité de transpondeurs passifs localisés dans un espace de détection d'un lecteur ayant plusieurs antennes avec leurs champs d'émission-réception non confondus spatiale ment ou temporellement.

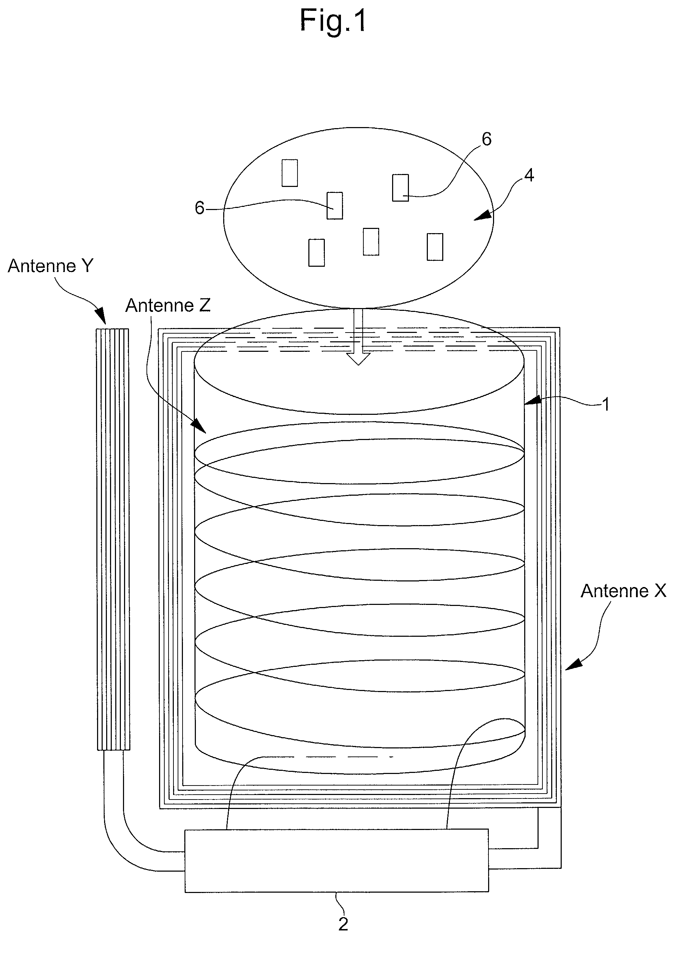

En particulier, l'invention concerne un procédé permettant d'identifier et de dresser la liste d'un ensemble de transpondeurs associés à divers objets placés dans un espace défini, dans le but d'établir l'inventaire de ces objets. A titre d'exemple, le procédé concerne la gestion de l'entrée ou de la sortie de lots d'habits respectivement associés à des transpondeurs. Ces habits sont apportés en vrac dans des sacs et placés dans un cylindre définissant un espace de détection du lecteur. Cette application est représentée à la figure 1 qui montre un lecteur 2 comprenant trois antennes X, Y et Z présentant des orientations différentes avec leurs champs d'émission-réception non confondus spatialement. L'antenne Z est agencée autour d'un cylindre 1 de réception des objets à identifier. Ces objets forment un ensemble ou un lot 4, chacun d'eux étant associé à un transpondeur 6.

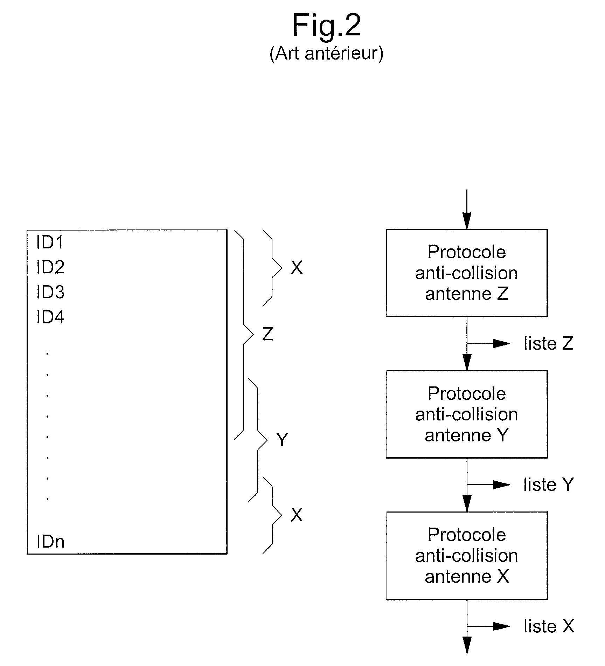

A la figure 2 est représenté schématiquement le procédé d'identification de la pluralité de transpondeurs selon l'art antérieur connu. Un protocole d'anti-collision est prévu pour chaque antenne l'une à la suite de l'autre. Ainsi, le procédé commence un protocole d'anti-collision en activant l'antenne Z, ce qui permet d'établir la liste Z d'un sous-ensemble de la pluralité d'objets à identifier. De manière classique, dans un tel protocole d'anti-collision, lorsqu'un transpondeur est identifié, il est mis dans un mode "silence" pour qu'il n'envoie plus de signal de réponse lors des interrogations successives après sa détection.

Etant donné que le champ d'émission-réception de l'antenne Z est directionnel, seule une partie des transpondeurs ayant une orientation favorable de communication avec l'antenne Z peuvent être détectés par celle-ci. A la fin du protocole d'anti-collision associé à l'antenne Z, le procédé d'identification active une autre antenne Y ayant une orientation différente. Un protocole d'anti-collision est également mis en oeuvre avec cette antenne Y, permettant d'établir une liste Y formant un sous-ensemble de la pluralité de transpondeurs. Cependant, comme cela est montré à la figure 2, certains transpondeurs sont identifiés par l'antenne Z et également par l'antenne Y. De même, lors du protocole d'anti-collision avec l'antenne X, un sous-ensemble de la liste X est formé de transpondeurs déjà identifiés par les autres antennes. Sur cette figure 2, la pluralité de transpondeurs est référencée ID1 à IDn.

Ainsi, le procédé d'identification complet de la pluralité de transpondeurs dure relativement longtemps, ce qui est notamment dû au fait que certains transpondeurs peuvent capter le champ d'émission d'au moins deux antennes et communiquer avec celles-ci. Cette situation résulte du fait que les transpondeurs utilisés dans ce genre d'application conserve le mode "silence" tant qu'ils sont alimentés. Par contre, dès qu'une coupure d'alimentation survient, les transpondeurs sont ré-initialisés automatiquement et perdent leur état respectif. Une telle coupure d'alimentation intervient lors du procédé d'identification au passage d'une antenne à l'autre. En effet, durant une certaine période, la première antenne est désactivée et une commutation s'effectue au bénéfice de la deuxième antenne. Durant cette opération de commutation d'antennes et de l'activation de la nouvelle antenne sélectionnée, les transpondeurs passifs ne sont plus alimentés. En conséquence, les transpondeurs déjà identifiés par une antenne peuvent à nouveau l'être par une autre antenne. La redondance dans la détection des transpondeurs augmente donc la durée du procédé d'identification, ainsi que l'étape de tri final nécessaire pour établir une liste complète des transpondeurs identifiés, en évitant des doublons, voir des triplets.

Le but de la présente invention est de palier l'inconvénient majeur mentionné ci-dessus en proposant un procédé d'identification efficace avec une durée réduite de détection.

A cet effet, le procédé d'identification selon l'invention se caractérise par le fait qu'il est prévu dans chaque transpondeur une mémoire agencée de manière à conserver son information sans alimentation seulement durant une certaine période, et en ce qu'il est prévu de stocker dans cette mémoire une information concernant l'identification du transpondeur considéré, en particulier l'activation du mode "silence", au moins à la fin de la mise en oeuvre du protocole d'anti-collision associé à une première antenne, cette information étant conservée par les transpondeurs identifiés par cette première antenne au moins durant un intervalle de temps comprenant la période de commutation de cette première antenne à ladite deuxième antenne pendant laquelle il y a absence de champ d'alimentation pour les transpondeurs passifs.

Grâce à ces caractéristiques, on évite de détecter à nouveau par la deuxième antenne les transpondeurs déjà identifiés par la première antenne. Les doublons dans la liste commune des transpondeurs identifiés par les deux antennes sont ainsi supprimés.

On notera en outre que la mémoire prévue ici ne nécessite pas l'utilisation d'un procédé propre aux mémoires non volatiles pour la fabrication du transpondeur.

Dans un mode de mise en oeuvre préféré, la mémoire est une mémoire analogique formée par une capacité associée à un interrupteur permettant sa charge et à des moyens de détection du niveau de tension de cette capacité agencé pour fournir une information binaire au circuit logique du transpondeur.

L'invention sera exposée ci-après de manière plus détaillée à l'aide du dessin donné à titre nullement limitatif et dans lequel :
- la figure 1, déjà décrite représente schématiquement une installation pour la mise en oeuvre du procédé d'identification selon l'invention;
- la figure 2, déjà décrite, représente un procédé d'identification d'une pluralité de transpondeurs selon l'art antérieur;
- la figure 3 représente schématiquement l'agencement d'un transpondeur pour la mise en oeuvre du procédé d'identification selon l'invention;
- la figure 4 représente une variante de réalisation d'une mémoire analogique du transpondeur de la figure 3;
- la figure 5 décrit schématiquement un mode de mise en oeuvre préféré du procédé d'identification selon l'invention, et
- la figure 6 montre une liste de la pluralité de transpondeurs et les sous-ensembles détectés par trois antennes X, Y et Z selon une variante du procédé.

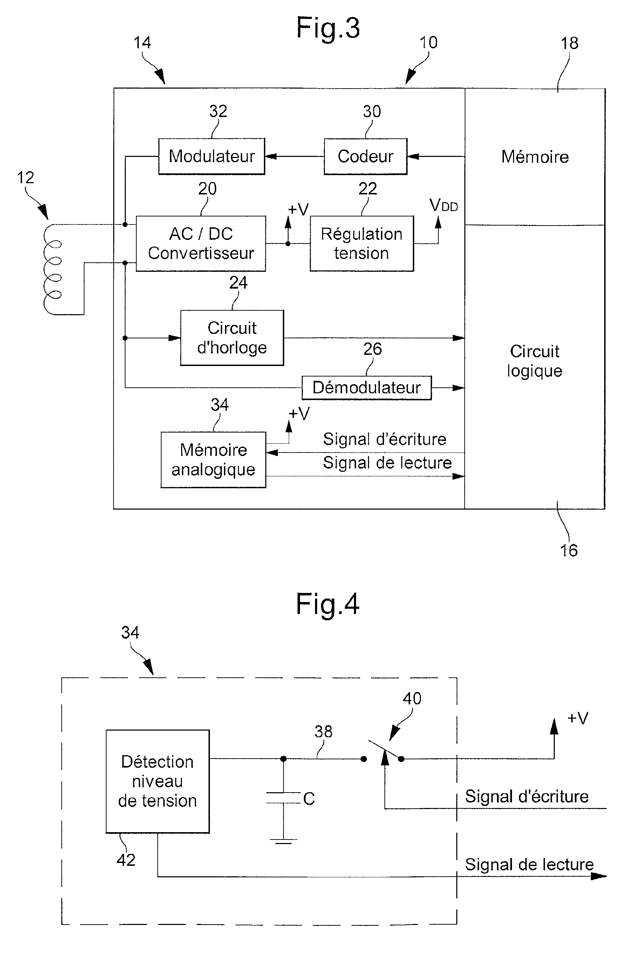

A la figure 3, le transpondeur 6 selon l'invention comprend une antenne 12 reliée à une partie analogique 14. Le circuit électronique 10 du transpondeur comprend également un circuit logique 16 et une mémoire 18. De manière classique, la partie analogique comprend un convertisseur AC/DC 20 relié aux deux extrémités de la bobine d'antenne. A la sortie du convertisseur 20, une tension redressée +V est obtenue. Ce signal de tension est fourni à des moyens de régulation 22 qui produisent la tension V_{DD} servant à l'alimentation des diverses parties du circuit électronique 10.

Un signal d'horloge est obtenu par le circuit d'horloge 24 qui extrait de la porteuse du signal reçu une base de temps. Ensuite, un démodulateur 26 servant au décodage des données reçues est également prévu. Le transpondeur 6 est aussi agencé pour fournir au moins un signal de réponse à l'aide d'un codeur 30 et d'un modulateur 32 dont la sortie est reliée à l'antenne 12.

Selon l'invention, il est prévu dans chaque transpondeur de préférence une mémoire analogique 34 alimentée directement par la tension +V à la sortie du convertisseur 20. L'agencement de cette mémoire analogique est représenté à la figure 4. Elle comprend une capacité C ayant une borne à la terre et l'autre reliée à une piste électrique 38 le long de laquelle est agencé un interrupteur 40 actionnable par le circuit logique 16. L'interrupteur 40 est relié au potentiel +V de sorte que la capacité C peut être chargée au maximum lorsque l'interrupteur 40 est passant, c'est-à-dire fermé. La mémoire analogique 34 comprend également des moyens de détection 42 du niveau de la tension de la capacité V. Ces moyens de détection 42 sont formés d'un comparateur à une entrée duquel est fournie une tension de référence. En sortie, la mémoire analogique fournit un signal de lecture binaire selon que la tension de la capacité est au-dessus ou au-dessous de la tension de référence.

Dans une première variante, la capacité est intégrée au circuit électronique du transpondeur formé entièrement d'un circuit intégré. Dans un tel cas, pour une capacité de dimension réduite et donc d'un coût relativement faible, il est possible de garder l'information de tension haute, c'est-à-dire au-dessus de la tension de référence, de l'ordre de la seconde en l'absence d'alimentation par le champ du lecteur. En augmentant les dimensions de la capacité intégrée, il est possible de pouvoir conserver cette information pour une dizaine de secondes notamment.

Le signal d'écriture fourni par le circuit logique permet donc d'actionner l'interrupteur 40 pour charger la capacité C lorsque le transpondeur passif est alimenté par le champ extérieur.

La mémoire analogique forme donc une mémoire "semi-volatile", la durée de conservation de l'information dans cette mémoire en l'absence de champ d'alimentation dépendant notamment de ses dimensions. Pour augmenter cette durée, il est prévu dans une autre variante d'agencer la capacité sous forme d'élément discret relié au circuit électronique 10 du transpondeur. Cette solution plus onéreuse et moins compacte que la solution intégrée permet de conserver l'information dans la mémoire analogique 34 de l'ordre de la minute à notamment une dizaine de minutes. Cette variante permet d'implémenter un mode particulier de mise en oeuvre du procédé selon l'invention, comme cela sera exposé par la suite.

D'autres types de mémoire ayant un caractère "semi-volatile" du type décrit ci-dessus peuvent évidemment être prévus sans sortir du cadre de la présente invention.

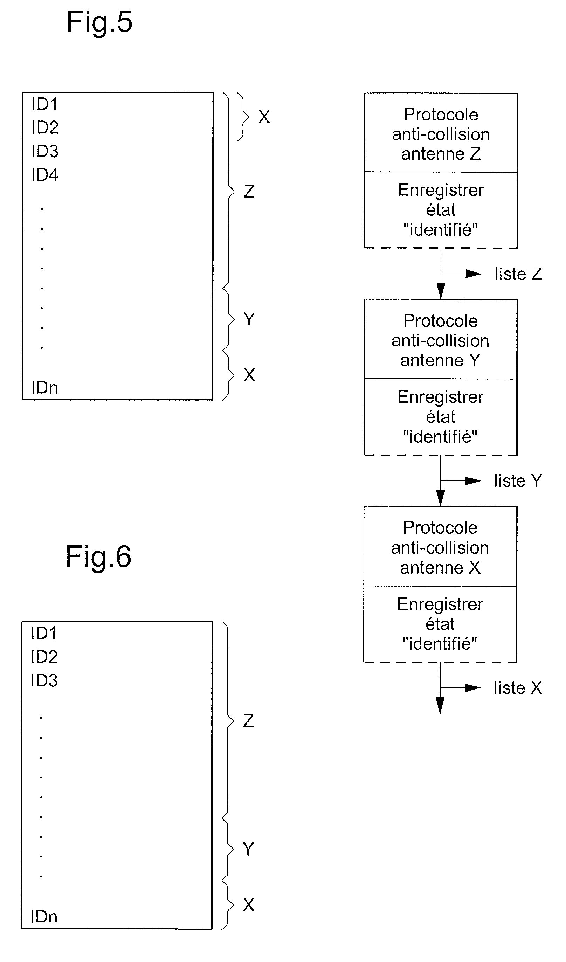

A l'aide de la figure 5, on décrira ci-après un mode préféré de mise en oeuvre du procédé d'identification selon l'invention. Comme dans l'art antérieur mentionné à la figure 2, il est prévu d'identifier une pluralité de transpondeurs dans un espace de détection donné à l'aide de plusieurs antennes en mettant en oeuvre en série un protocole d'anti-collision pour chacune des antennes. Ce protocole d'anti-collision prévoit de mettre dans un mode "silence" tout transpondeur détecté par une antenne donnée au cours du protocole d'anti-collision associé à cette antenne. Pour palier l'inconvénient majeur de l'art antérieur, à la fin du protocole d'anti-collision avec une première antenne Z, une commande est envoyée par le lecteur aux transpondeurs ayant pu être identifiés par l'antenne Z instruisant ces transpondeurs de mettre dans la mémoire analogique 34 l'information concernant leur état, à savoir s'ils ont été identifiés et mis en mode "silence". Le circuit logique 16 du transpondeur envoie donc un signal d'écriture à la mémoire 34 alors que les transpondeurs sont toujours alimentés par le champ de l'antenne Z, pour que les transpondeurs identifiés mis en mode "silence" chargent leur capacité C qui présente alors une tension haute. Ainsi, le sous-ensemble de transpondeurs formant la liste Z vont conserver l'information du fait qu'ils ont été identifiés par l'antenne Z au moins durant un certain intervalle de temps après la désactivation de l'antenne Z. La mémoire analogique 34 est agencée de manière à ce que cet intervalle de temps comprenne au moins la période de commutation de l'antenne Z à l'antenne Y suivante. Lors de l'activation de cette antenne Y, les transpondeurs reçoivent à nouveau un champ d'alimentation et la mémoire analogique fournit automatiquement, dans une première variante préférée, au circuit logique 16 l'information binaire relative à la tension de la capacité C. Si la capacité C a été chargée à la fin du protocole d'anti-collision associé à l'antenne Z, le circuit logique reçoit l'information que le transpondeur considéré a déjà été identifié lors du protocole précédent. Ainsi, le circuit logique met à nouveau le transpondeur 6 dans le mode "silence" de sorte que ce transpondeur ne répondra pas aux signaux d'interrogation du lecteur lors du protocole d'anti-collision associé à l'antenne Y. De ce fait, comme représenté à la figure 5, le sous-ensemble de transpondeurs identifiés formant la liste Y est totalement distinct du sous-ensemble formant la liste Z. Il en résulte que le protocole d'anti-collision associé à l'antenne Y est plus rapide que dans le cas de l'art antérieur. De plus, une étape finale de tri pour écarter d'éventuels doublons devient superflu ou pour le moins plus rapide si toutefois implémenté pour des questions de fiabilité du procédé d'identification.

Le procédé d'identification décrit à l'aide de la figure 5 concerne un système dans lequel les transpondeurs présentent une mémoire analogique intégrée de manière à retenir une information binaire durant un intervalle de temps peu supérieur à la période de commutation entre l'activation successive de deux antennes par le lecteur.

A la fin du protocole d'anti-collision associé à l'antenne Y, il est également prévu que le lecteur envoie un signal de commande pour que les transpondeurs identifiés retiennent cette information. Ensuite, le lecteur effectue la commutation entre l'antenne Y et l'antenne X pour effectuer un troisième protocole d'anti-collision associé à l'antenne X. Grâce au procédé de l'invention, la liste X du sous-ensemble de transpondeurs identifiés par l'antenne X ne présente pas de recouvrement avec le sous-ensemble de la liste Y. Toutefois, dans cette variante du procédé, la liste X peut présenter un certain recouvrement avec la liste Z, comme représenté à la figure 5. Ceci provient du fait que certains transpondeurs activés par l'antenne Z ne l'ont plus été par l'antenne Y. Comme le protocole d'anti-collision associé à l'antenne Y a eu une durée supérieure audit intervalle de temps de conservation de l'information dans la mémoire intégrée 34, lorsque ces transpondeurs sont activés à nouveau par l'antenne X dont ils reçoivent le champs d'alimentation, l'information du fait qu'ils ont été précédemment identifié par l'antenne Z n'a pas pu être conservée.

Pour palier cet inconvénient restant de la variante du procédé de l'invention décrit ci-dessus, il est possible, comme mentionné précédemment, de prévoir une capacité C relativement grande, notamment au moyen d'un élément discret relié au circuit électronique, pour conserver l'information d'une tension supérieure à la tension de référence dans la mémoire 34 pendant un intervalle de temps englobant la période nécessaire au protocole d'anti-collision associé à l'antenne Y. Selon le nombre de transpondeurs à identifier qui peut être de plusieurs centaines, le protocole d'anti-collision associé à l'antenne Y peut durer de l'ordre de la minute à une dizaine de minutes. Dans cette variante, il est possible d'obtenir trois sous-ensembles de transpondeurs, formant respectivement les listes X, Y et Z, ne présentant aucun recouvrement. L'inventaire de la pluralité de transpondeurs placés dans le champs de détection du lecteur est donc constitué par ces trois listes sans aucun doublon, comme cela est représenté schématiquement à la figure 6.

Dans une autre variante du procédé, l'information relative à l'état de la mémoire "semi-volatile" est communiqué au circuit logique sur interrogation de ce dernier. D'autres variantes peuvent être envisagées par l'homme du métier.

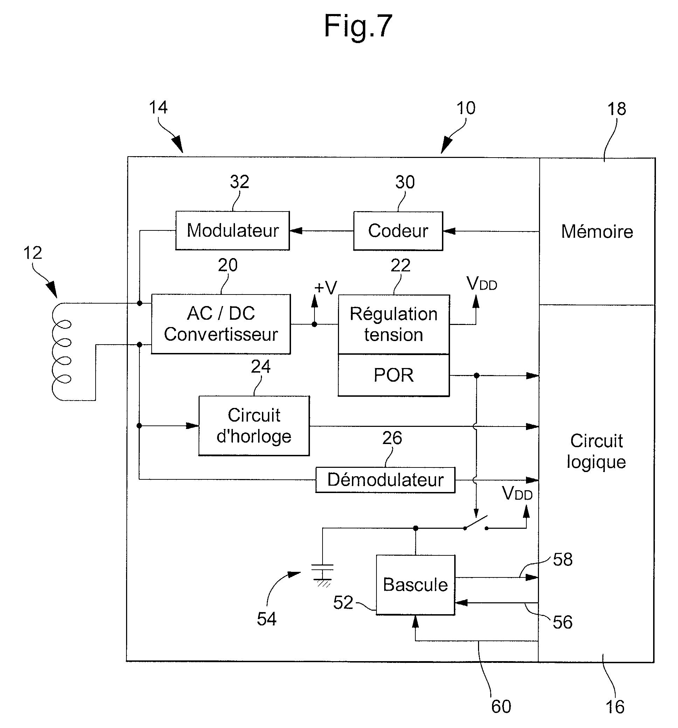

Dans un autre mode de réalisation de l'invention, représenté à la figure 7, il est prévu de mémoriser temporairement l'état relatif à l'identification du transpondeur dans une mémoire digitale formée par une bascule, variante donnée à titre nullement limitatif. Les éléments déjà décrits précédemment ne seront pas à nouveau décrit ici en détail. De manière classique, le circuit de régulation 22 est associé à un circuit d'initialisation à l'alimentation (POR) agissant sur le circuit logique 16. Ce circuit POR initialise le circuit logique 16 lorsque la tension d'alimentation descend en dessous d'un seuil donné. Selon l'invention, il est prévu une bascule 52 reliée au circuit logique mais agencée de manière à ne pas être initialisée par le circuit POR lors d'une coupure de l'alimentation. Par contre, ce circuit POR actionne un interrupteur agencé entre l'alimentation V_{DD} et une borne d'alimentation de la bascule lorsque la tension d'alimentation du transpondeur descend en dessous dudit seuil donné. Cette borne est reliée à une capacité 54 d'alimentation de la bascule. En d'autres termes, la capacité 54 et la bascule sont agencées en parallèle et forment ensemble une unité indépendante, isolée électriquement du reste du circuit électronique du transpondeur lors d'une coupure d'alimentation, c'est-à-dire lorsque cette dernière devient inférieure audit seuil.

Comme dans le premier mode de réalisation décrit ci-avant, la bascule reçoit en entrée un signal 56 concernant l'état d'identification du transpondeur et fournit en lecture un signal logique donné par l'état de la bascule correspondant à cet état d'identification. Cette lecture est automatique lors de la mise en fonctionnement du circuit logique ou sur interrogation de ce dernier.

Ensuite, il est prévu de pouvoir initialiser la bascule 52 via un signal de commande 60 agissant sur cette bascule, notamment au début d'un protocole d'identification.

On remarquera que le signal d'écriture peut agir automatiquement et directement sur la bascule lors du changement d'état d'identification du transpondeur, c'est-à-dire juste après son identification. Dans cette variante, il n'est donc plus nécessaire d'envoyer, en fin de protocole d'identification relatif à une antenne donnée, un signal d'écriture de l'état d'identification du transpondeur. Dans ce mode de réalisation, la bascule 52 garde son état logique durant une certaine période limitée, fonction de la capacité 54 sélectionnée et de l'implémentation de celle-ci. En effet, les courants de fuite inhérents aux circuits électroniques engendrent une décroissance de la charge électrique et de la tension de la capacité 54. On notera que ces courants de fuite peuvent être de grandeurs variables. Il est donc possible de définir leur importance dans la conception du circuit électronique du transpondeur.

Finalement on remarquera que la présente invention s'applique de même également dans le cas de plusieurs antennes présentant une même orientation, mais activées successivement, notamment lorsqu'un multiplexage de ces antennes est prévu. Dans ce cas, selon la présente terminologie, les champs d'émission-réception des antennes sont temporellement non confondus. De plus, ils peuvent être également spatialement non confondus, notamment lorsqu'une certaine distance les sépare.

## Revendications

1. Procédé d'identification d'une pluralité de transpondeurs passifs (6) localisés dans un espace de détection d'un lecteur (2) ayant au moins une première antenne (Z) et une deuxième antenne (Y) avec leurs champs d'émission-réception respectifs non confondus spatialement et/ou temporellement, ce procédé mettant en oeuvre un protocole d'anti-collision pour chacune des antennes au cours duquel chaque transpondeur identifié par une antenne donnée est ensuite mis dans un mode "silence" au cours du protocole associé à cette antenne, **caractérisé en ce qu'**il est prévu dans chaque transpondeur une mémoire (34, 52) agencée de manière à conserver son information sans alimentation du champ du lecteur seulement durant une certaine période, et **en ce qu'**il est prévu de stocker dans cette mémoire une information concernant l'état d'identification du transpondeur considéré, en particulier le fait de l'activation du mode "silence", au moins à la fin du protocole d'anti-collision associé à ladite première antenne, ladite information étant conservée par au moins les transpondeurs identifiés par cette première antenne au moins durant un intervalle de temps comprenant la période de commutation de la première antenne à ladite deuxième antenne pendant laquelle il y a absence de champ d'alimentation des transpondeurs.

2. Procédé d'identification selon la revendication 1, **caractérisé en ce que** ladite mémoire (34) est une mémoire analogique agencée de manière à pouvoir conserver une information binaire, ledit intervalle de temps étant de l'ordre de la seconde à une dizaine de secondes.

3. Procédé d'identification selon la revendication 2, **caractérisé en ce que** ladite mémoire analogique est formée par une capacité intégrée dans la partie analogique 14 du circuit électronique 10 du transpondeur 6.

4. Procédé d'identification selon la revendication 1, **caractérisé en ce que** ladite mémoire est une mémoire analogique, ledit intervalle de temps étant de l'ordre de la minute à une dizaine de minutes.

5. Procédé d'identification selon la revendication 4, **caractérisé en ce que** ladite mémoire analogique comprend une capacité formée par un élément discret relié électriquement à la partie analogique (14) du circuit électronique (10) du transpondeur (6).

6. Procédé d'identification selon la revendication 1, dans lequel chacun des transpondeurs comprend un circuit logique (16) et un circuit (POR) d'initialisation à l'alimentation de ce circuit logique, **caractérisé en ce que** ladite mémoire (52) est une mémoire digitale, cette dernière étant agencée en parallèle à une capacité de manière que ledit circuit d'initialisation, lorsque la tension d'alimentation du transpondeur devient inférieure à un seuil donné, n'initialise pas ladite mémoire logique mais commande un interrupteur pour isoler électriquement cette mémoire logique et ladite capacité chargée.

7. Procédé selon la revendication 6, **caractérisé en ce que** ladite mémoire logique peut recevoir en entrée un signal de commande fourni par ledit circuit logique pour initialiser sélectivement cette mémoire logique.
